# EUROPÄISCHE PATENTSCHRIFT

(11) **EP 3 433 050 B1**
(45) Veröffentlichungstag und Bekanntmachung des Hinweises auf die Patenterteilung: **07.06.2023**
(21) Anmeldenummer: 17707856.5
(22) Anmeldetag: 28.02.2017
(51) Int. Cl.: B23K 33/00, B23K 9/025, B23K 103/10, B23K 103/06

(54) **VERFAHREN ZUR HERSTELLUNG EINER FUEGEVERBINDUNG DURCH SCHWEISSEN UND NACH DEM VERFAHREN HERGESTELLTE FUEGEVERBINDUNG**
METHOD FOR PRODUCING A JOINING CONNECTION VIA WELDING AND JOINING CONNECTION PRODUCED ACCORDING TO SAID METHOD
PROCÉDÉ DE RÉALISATION D'UN ASSEMBLAGE PAR ABOUTEMENT PAR SOUDAGE ET ASSEMBLAGE PAR ABOUTEMENT RÉALISÉ SELON LE PROCÉDÉ

(30) Priorität: 26.03.2016 DE 102016003801
(43) Veröffentlichungstag der Anmeldung: 30.01.2019
(73) Patentinhaber: Audi AG, 85045 Ingolstadt (DE)
(72) Erfinder: RÜEGG, Markus, 71636 Ludwigsburg (DE); ERNST, Michael, 71543 Wüstenrot (DE)
(86) Internationale Anmeldenummer: PCT/EP2017/054616
(87) Internationale Veröffentlichungsnummer: WO 2017/167520

(56) Entgegenhaltungen:
- WO-A2-2015/058225
- AT-U1- 13 491
- DE-A1-102005 004 787
- DE-A1-102009 052 220
- JP-A- 2009 012 012
- US-A1- 2004 182 836

## Beschreibung

Die Erfindung betrifft eine Baugruppe aus einem ersten metallischen Bauteil und einem zweiten metallischen Bauteil, die mit einer mittels eines Strahlschweißverfahrens hergestellten Schweißnaht als Fügeverbindung verbunden sind, siehe z.B. AT 13 491 U1.

Ferner betrifft die Erfindung ein Verfahren zur Herstellung der Fügeverbindung.

Beim Verbinden von metallischen Bauteilen, insbesondere aus Aluminium hergestellte Bauteile mittels Schweißen, bspw. mit einem Lichtbogenschweißverfahren oder einem Laserstrahlschweißen, entstehen im Start- oder Anfangsbereich einer Schweißnaht Überhöhungen, die durch spanabhebende Bearbeitung beseitigt werden müssen, wenn eine solche Schweißverbindung, bspw. im Karosseriebau, für einen Nutzer sichtbar wäre.

Aus der AT 13 491 U1 ist eine Fügeverbindung mit einer zwischen einem ersten metallischen Bauteil und einem zweiten metallischen Bauteil verlaufenden und mittels eines Schweißverfahrens hergestellten Schweißnaht bekannt. Diese Schweißnaht bildet einen Schweißnahthauptabschnitt sowie einen sich daran anschließenden Schweißnahtendabschnitt. Dieser Schweißnahtendabschnitt ist aus dem Fügespalt der beiden Bauteile in einen der Bauteile bogenförmig herausgeführt und setzt sich in entgegengesetzter Richtung zum Schweißnahthauptabschnitt und zu demselben geneigt hin fort. Damit soll die Bildung eines Endkrater am Schweißnahtende reduziert sowie Endkraterrisse weitestgehend vermieden werden.

Eine Fügeverbindung mit einer zwischen einem ersten metallischen Bauteil und einem zweiten metallischen Bauteil verlaufenden und mittels eines Schweißverfahren hergestellten Schweißnaht besteht gemäß der WO 2015/058225 in einem Schweißnahthauptabschnitt mit konstanter Schweißnahtbreite und einer sich daran anschließenden Schweißnahtendabschnitt, in welchem die durch einen Auftreffort eines Schweißstrahls definierte Schweißnahtbahn quer zu einem von den beiden Bauteilen gebildeten Fügestoß alternierend eine Auslenkung in das erste Bauteil und eine Auslenkung in der zweite Bauteil aufweist. Mit einer solchen Fügeverbindung sollen günstige Eigenschaften im Hinblick auf die Vermeidung von Endkrater und Endkraterrissen erreicht werden.

Die DE 10 2009 052 220 A1 beschreibt ein Verfahren zum Herstellen einer Schweißnaht in einem Fügestellenbereich mittels eines Energiestahls, wobei im Bereich eines Schweißnahtendabschnittes von einer geraden Linie abgewichen und auf einer kreisförmigen Bahn oder beliebigen geschlossenen Bahn geführt wird.

Weiterhin ist aus der DE 103 49 677 A1 ein Verfahren zum Laserstrahlschweißen mit reduzierter Bildung von Endkrater bekannt, bei welchem zum Nahtende der Fokus des Laserstrahls von einer zu schweißenden Oberfläche entfernt wird.

Schließlich wird bei einem gepulsten Lichtbogenschweißverfahren gemäß der JP 2009 012 012 A im Bereich eines Schweißnahtanfangsabschnittes und eines Schweißnahtendabschnittes eine Pulsform des Schweißstromes verwendet, die sich von einer Pulsform des Schweißstromes während eines stationären Schweißbetriebs unterscheidet.

Es ist Aufgabe der Erfindung eine Baugruppe aus einem ersten metallischen Bauteil und einem zweiten metallischen Bauteil einzugeben, die mittels eines Schweißverfahrens, insbesondere mittels eines Lichtbogenschweißverfahrens hergestellten Schweißnaht als Fügeverbindung verbunden sind. Ferner ist es Aufgabe der Erfindung ein Verfahren zur Herstellung einer solchen Fügeverbindung zu schaffen.

Die erstgenannte Aufgabe wird gelöst durch eine Baugruppe mit den Merkmalen des Patentanspruchs 1.

Eine solche Baugruppe aus einem ersten metallischen Bauteil und einem zweiten metallischen Bauteil, die mit einer mittels eines Strahlschweißverfahrens hergestellten Schweißnaht verbunden sind, zeichnet sich erfindungsgemäß dadurch aus, dass
- die Schweißnaht einen entlang eines zwischen den metallischen Bauteilen gebildeten Fügespaltes sich erstreckenden Schweißnahthauptabschnitt aufweist,
- die Schweißnaht einen aus der Richtung des Fügespaltes in das erste oder zweite Bauteil herausgeführten Schweißnahtanfangsabschnitt aufweist, wobei das erste oder zweite Bauteil im Bereich des Schweißnahtanfangsabschnittes eine gegenüber den den Fügespalt bildenden Oberkanten der beiden Bauteile lokale abgesenkte Vertiefung aufweist, und/oder
- die Schweißnaht einen aus der Richtung des Fügespaltes in das erste oder zweite Bauteil herausgeführten Schweißnahtendabschnitt aufweist, wobei das erste oder zweite Bauteil im Bereich des Schweißnahtendabschnittes eine gegenüber den den Fügespalt bildenden Oberkanten der beiden Bauteile lokale abgesenkte Vertiefung aufweist, wobei die lokalen Vertiefungen außerhalb des Fügespaltes in einer der beiden Bauteile liegen.

Mit einer solchen außerhalb des Fügespaltes bzw. der Schweißnaht realisierten Vertiefung wird eine im Start- und/oder Endpunkt der Schweißnaht entstehende Überhöhung ausgeglichen, da die Vertiefung vermehrt Schweißmaterial aufnehmen kann und daher eine Überhöhung vermieden wird. Damit entfällt eine Nacharbeit zum Entfernen einer Schweißnahtüberhöhung.

Beim Lichtbogen- oder Laserstrahlschweißen bildet sich am Ende einer Schweißnaht ein sogenannter Endkrater, der infolge der Volumenschrumpfung der erstarrten Schmelze entsteht. Ein solcher Endkrater erzeugt eine Kerbwirkung im Bereich der Schweißnaht und führt zu einer Schwächung der Fügeverbindung. Mit einem Endpunkt der Schweißnaht im Bereich der abgesenkten Vertiefung wird die Kerbwirkung deutlich reduziert, da der Endkrater nun außerhalb des Fügespaltes liegt.

Nach einer vorteilhaften Weiterbildung der Erfindung ist die abgesenkte Vertiefung ausgehend von dem Schweißnahthauptabschnitt senkrecht zur Ebene des Fügespaltes sich konusförmig erweiternd ausgebildet. Damit ist ausreichend Raum zur Aufnahme von Schweißmaterial des Schweißnahtanfangsabschnittes im Anfangsbereich der Schweißnaht vorhanden.

Eine weitere vorteilhafte Ausgestaltung der Erfindung sieht vor, dass
- das erste metallische Bauteil als Strangpreßprofil oder Gussbauteil ausgebildet ist, und
- das zweite metallische Bauteil als Gussbauteil mit wenigstens einer Vertiefung zur Aufnahme des Schweißnahtanfangsabschnittes und/oder des Schweißnahtendabschnittes ausgebildet ist.

Diese abgesenkte Vertiefung kann damit gleichzeitig mit der Herstellung des Gussbauteils als zweites metallisches Bauteil realisiert werden, wodurch kein zusätzlicher Aufwand entsteht. Vorzugsweise sind das erste metallische Bauteil und das zweite metallische Bauteil aus einem Aluminiumwerkstoff hergestellt.

Die zweitgenannte Aufgabe wird gelöst durch ein Verfahren mit den Merkmalen des Patentanspruchs 5.

Bei diesem erfindungsgemäßen Verfahren werden zur Herstellung einer Fügeverbindung mit einer zwischen einem ersten metallischen Bauteil und einem zweiten metallischen Bauteil verlaufenden und mittels eines Energiestrahls hergestellten Schweißnaht, wobei die Schweißnaht einen Schweißnahtanfangsabschnitt und einen Schweißnahthauptabschnitt aufweist und wobei folgende Verfahrensschritte durchgeführt werden:
- Erzeugen eines Schweißnahtanfangsabschnittes der Schweißnaht in einem Bereich des ersten oder zweiten Bauteils, wobei dieser Bereich als gegenüber den einen Fügespalt bildenden Oberkanten der beiden Bauteile lokale außerhalb des Fügespaltes abgesenkte Vertiefung ausgebildet ist,
- Führen des Energiestrahls ausgehend von dem Bereich des Schweißnahtanfangsabschnittes in den von den metallischen Bauteilen gebildeten Fügespalt, und
- Erzeugen eines Schweißnahthauptabschnittes entlang des von den metallischen Bauteilen gebildeten Fügespaltes.

Die zweitgenannte Aufgabe wird auch gelöst durch ein Verfahren mit den Merkmalen des Patentanspruchs 6.

Bei diesem Verfahren zur Herstellung einer Fügeverbindung mit einer zwischen einem ersten metallischen Bauteil und einem zweiten metallischen Bauteil verlaufenden und mittels eines Energiestrahls hergestellten Schweißnaht, wobei die Schweißnaht einen Schweißnahthauptabschnit und einen Schweißnahtendabschnitt aufweist und wobei folgende Verfahrensschritte durchgeführt werden:- Erzeugen eines Schweißnahtendabschnittes der Schweißnahtnaht in einem Bereich des ersten oder zweiten Bauteils, wobei dieser Bereich als gegenüber den einen Fügespalt bildenden Oberkanten der beiden Bauteile lokale außerhalb des Fügespaltes abgesenkte Vertiefung ausgebildet ist,
- Führen des Energiestrahls ausgehend von dem Bereich des Schweißnahthauptabschnittes in den von den metallischen Bauteilen gebildeten Fügespalt,
- Erzeugen eines Schweißnahthauptabschnittes entlang des von den metal lischen Bauteilen gebildeten Fügespaltes mittels des Energiestrahls, und
- Erzeugen eines Schweißnahtendabschnittes der Schweißnaht in einem Bereich des ersten oder zweiten Bauteils mittels des aus der Richtung des Fügespaltes herausgeführten Energiestrahls.

Der geringfügige Mehraufwand für die längere Schweißnaht wird jedoch mehrfach durch das Entfallen der Nacharbeit einer Schweißnahtüberhöhung ausgeglichen.

Es bietet sich gemäß einer Weiterbildung der Erfindung an, beide Verfahren zur Herstellung einer Fügeverbindung anzuwenden, d.h. die Schweißnaht im Bereich einer lokalen Vertiefung mit einem Schweißnahtanfangsabschnittes zu beginnen und im Bereich einer lokalen Vertiefung mit einem Schweißnahtendabschnitt zu beenden, wobei die lokalen Vertiefungen außerhalb des Fügespaltes in einer der beiden Bauteile liegen.

Als Energiestrahl wird bei dem erfindungsgemäßen Verfahren vorzugsweise der Lichtbogen eines Lichtbogenschweißverfahrens eingesetzt.

Die Erfindung wird nachfolgend anhand eines Ausführungsbeispiels unter Bezugnahme auf die beigefügten Figuren ausführlich beschrieben. Es zeigen:
- Figur 1: eine schematische und perspektivische Teildarstellung von zwei mittels einer Schweißnaht zu fügenden und erfindungsgemäß vorbereiteten Bauteile einer Baugruppe,
- Figur 2: eine schematische und perspektivische Darstellung der Bauteile nach Figur 1 mit einer erfindungsgemäßen Fügeverbindung, und
- Figur 3: eine schematische und perspektivische Darstellung der ungefügten Baugruppe nach Figur 1 in einer Seitenansicht.

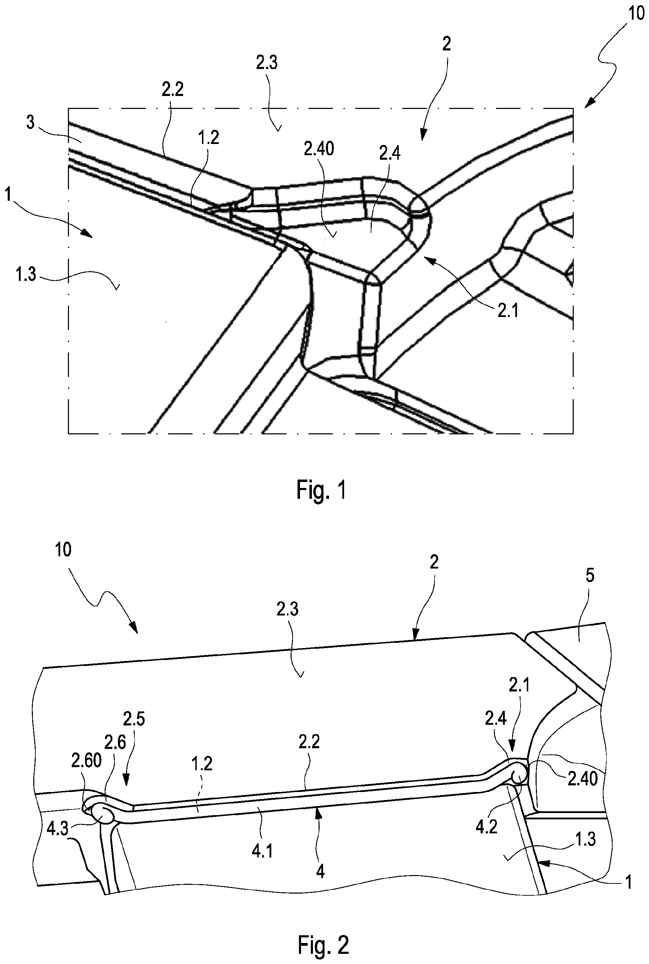

Die Figur 1 zeigt ausschnittsweise in einer Teildarstellung eine Baugruppe 10 aus einem ersten metallischen Bauteil 1 und einem zweiten metallischen Bauteil 2, wobei diese beiden Bauteile 1 und 2 zur Bildung eines Fügespaltes 3 aneinander liegen und gemäß Figur 2 mittels einer Schweißnaht 4 entlang dieses Fügespaltes 3 verbunden werden. Zur Erzeugung der Schweißnaht 4 wird bspw. ein Lichbogenschweißverfahren eingesetzt.

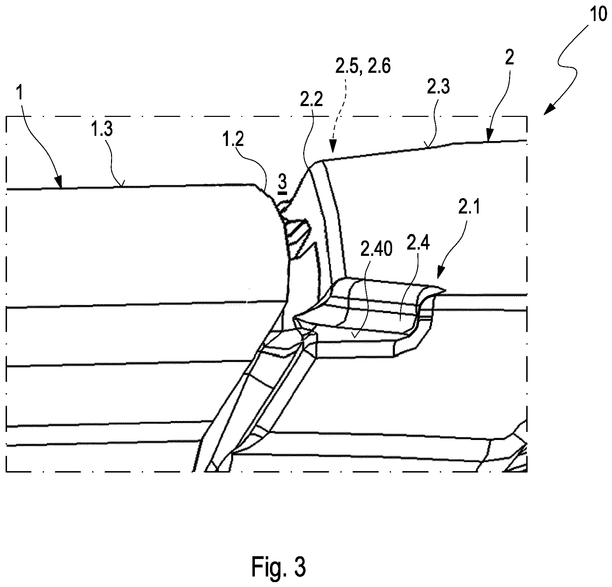

Diese Schweißnaht 4 umfasst gemäß Figur 2 mehrere Abschnitte. So bildet ein Schweißnahthauptabschnitt 4.1 eine entlang des Fügespaltes 3 geführte Schweißnaht. Die Schweißnaht 4 beginnt in einem Anfangsbereich 2.1 des zweiten Bauteils 2 mit einem Schweißnahtanfangsabschnitt 4.2. Dieser Anfangsbereich 2.1 stellt damit ein Startpunkt für den Energiestrahl, d. h. den Lichtbogen des Lichtbogenschweißverfahrens dar und wird von dort in den Fügespalt 3 zur Erzeugung des Schweißnahthauptabschnittes 4.1 geführt. Um in diesem Anfangsbereich 2.1 eine durch Erzeugung des Schweißnahtanfangsabschnittes 4.2 entstandene Schweißnahtüberhöhung zu vermeiden, ist dieser Anfangsbereich 2.1 des Bauteils 2 als gegenüber den den Fügespalt 3 bildenden Oberkanten 1.2 und 2.2 der beiden Bauteile 1 und 2 abgesenkte Vertiefung 2.4 ausgebildet, wie nachfolgend anhand der Figuren 1 und 3 näher erläutert wird.

Nach dieser Figur 1 schließt sich am Ende des Fügespaltes 3 eine gegenüber den den Fügespalt 3 bildenden Oberkanten 1.2 und 2.2 der beiden Bauteile 1 und 2 die abgesenkte Vertiefung 2.4 an, die in dem Bauteil 2 realisiert ist. Damit liegt die Bodenfläche 2.40 dieser Vertiefung 2.4 tiefer als die angrenzenden Oberflächen 1.3 und 2.3 des ersten Bauteils 1 bzw. des zweiten Bauteils 2, wie dies insbesondere aus Figur 3 ersichtlich ist. Nach Figur 2 erstreckt sich die Schweißnaht 4 ausgehend von dem Schweißnahthauptabschnitt 4.1 aus der Richtung des Fügespaltes 3 heraus unter einem spitzen Winkel zur Richtung des Fügespaltes 3 und senkrecht zu dessen Ebene in die in das Bauteil 2 sich konisch erweiternde Vertiefung 2.4. Die ausgehend von dem Fügespalt 3 sich konisch erweiternde Kontur der Vertiefung 2.4 ist den Figuren 1 und 3 erkennbar dargestellt.

Damit wird der Lichtbogen mit Startpunkt der Vertiefung 2.4 in einem spitzen Winkel zur Richtung des Fügespaltes 3 unter Erzeugung des Schweißstrahlanfangsabschnittes 4.2 in den Fügespalt 3 und dort entlang zur Erzeugung des Schweißnahthauptabschnittes 4.1 geführt, der in einen letzten Abschnitt der Schweißnaht 4, nämlich in einen Schweißnahtendabschnitt 4.3 übergeht.

Hierzu schließt sich am gegenüberliegenden Ende des Fügespaltes 3 eine in gleicher Weise wie die Vertiefung 2.4 ausgeführte weitere abgesenkte Vertiefung 2.6 an, die sich ebenso ausgehend von dem Fügespalt 3 und senkrecht zu demselben in einer sich konisch erweiterten Kontur in das zweite Bauteil 2 erstreckt. Diese weitere Vertiefung 2.6 stellt ein Endbereich 2.5 für die Schweißnaht 4 dar.

Auch diese weitere Vertiefung 2.6 weist eine Bodenfläche 2.60 auf, die gegenüber den die Fügespaltes 3 bildenden Oberkanten 1.2 und 2.2 der beiden Bauteile 1 und 2 abgesenkt ist. Damit liegt die Bodenfläche 2.60 dieser Vertiefung 2.6 in gleicher Weise tiefer als die angrenzenden Oberflächen 1.3 und 2.3 des ersten Bauteils 1 bzw. des zweiten Bauteils 2.

Damit wird der Lichtbogen ausgehend von dem bereits im Fügespalt 3 erzeugten Schweißnahthauptabschnitt 4.1 in einem spitzen Winkel zur Richtung des Fügespaltes 3 unter Erzeugung des Schweißnahtendabschnitt 4.3 in die weitere Vertiefung 2.6 geführt. Gegenüber des Fügespaltes 3 entsteht in diesem Endbereich 2.5 vermehrt Schweißmaterial, das aufgrund der abgesenkten weiteren Vertiefung 2.6 so aufgenommen wird, dass keine Schweißnahtüberhöhung entstehen kann.

Das erste metallische Bauteil 1 ist als Aluminium-Strangpreßprofil ausgebildet, während das zweite metallische Bauteil als Aluminium-Gussbauteil hergestellt ist. Damit können in diesem Aluminium-Gussbauteil mit dem Gießvorgang gleichzeitig die lokalen Vertiefungen 2.4 und 2.6 realisiert werden. Damit ist für die Realisierung dieser Vertiefungen kein zusätzlicher Aufwand erforderlich.

Als erstes metallisches Bauteil 1 kann auch ein Gussbauteil eingesetzt werden.

Das Bauteil 2 ist als Aluminium-Gussknoten für eine Fahrzeugkarosserie hergestellt, der mit weiteren Bauteilen 5 (vgl. Figur 2) ebenso über eine Schweißverbindung verbunden wird.

### Bezugszeichen

- 1: erstes Bauteil der Baugruppe 10
- 1.2: Oberkante des ersten Bauteils 1
- 1.3: Oberfläche des ersten Bauteils 1
- 2: zweites Bauteil der Baugruppe 10
- 2.1: Anfangsbereich des zweiten Bauteils 2
- 2.2: Oberkante des zweiten Bauteils 2
- 2.3: Oberfläche des zweiten Bauteils 2
- 2.4: Vertiefung des zweiten Bauteils 2
- 2.40: Bodenfläche der Vertiefung 2.4
- 2.5: Endbereich des zweiten Bauteils 2
- 2.6: weitere Vertiefung des zweiten Bauteils 2
- 2.60: Bodenfläche der Vertiefung 2.5
- 3: Fügespalt
- 4: Schweißnaht
- 4.1: Schweißnahthauptabschnitt
- 4.2: Schweißnahtanfangsabschnitt
- 4.3: Schweißnahtendabschnitt
- 5: Bauteil

- 10: Baugruppe

## Patentansprüche

1. Baugruppe (10) aus einem ersten metallischen Bauteil (1) und einem zweiten metallischen Bauteil (2), die mit einer mittels eines Schweißverfahrens hergestellten Schweißnaht (4) als Fügeverbindung verbunden sind,
wobei
- die Schweißnaht (4) einen entlang eines zwischen den metallischen Bauteilen (1, 2) gebildeten Fügespaltes (3) sich erstreckenden Schweißnahthauptabschnitt (4.1) aufweist, **dadurch gekennzeichnet, dass**
- die Schweißnaht (4) einen aus der Richtung des Fügespaltes (3) in das erste oder zweite Bauteil (1, 2) herausgeführten Schweißnahtanfangsabschnitt (4.2) aufweist, wobei das erste oder zweite Bauteil (1, 2) im Bereich des Schweißnahtanfangsabschnittes (4.2) eine gegenüber den den Fügespalt (3) bildenden Oberkanten (1.2, 2.2) der beiden Bauteile (1, 2) lokale abgesenkte Vertiefung (2.4) aufweist, und/oder
- die Schweißnaht (4) einen aus der Richtung des Fügespaltes (3) in das erste oder zweite Bauteil (1, 2) herausgeführten Schweißnahtendabschnitt (4.3) aufweist, wobei das erste oder zweite Bauteil (1, 2) im Bereich des Schweißnahtendabschnittes (4.3) eine gegenüber den den Fügespalt (3) bildenden Oberkanten (1.2, 2.2) der beiden Bauteile (1, 2) lokale abgesenkte Vertiefung (2.6) aufweist,
wobei die lokalen Vertiefungen (2.4, 2.6) außerhalb des Fügespaltes (3) in einer der beiden Bauteile (1, 2) liegen.

2. Baugruppe nach Anspruch 1, **dadurch gekennzeichnet, dass** die abgesenkte Vertiefung (2.4, 2.6) ausgehend von dem Schweißnahthauptabschnitt (4.1) senkrecht zur Ebene des Fügespaltes (3) sich konusförmig erweiternd ausgebildet ist.

3. Baugruppe nach Anspruch 1 oder 2, **dadurch gekennzeichnet, dass**
- das erste metallische Bauteil (1) als Strangpreßprofil oder Gussbauteil ausgebildet ist, und
- das zweite metallische Bauteil (2) als Gussbauteil mit wenigstens einer lokale Vertiefung (2.4, 2.6) zur Aufnahme des Schweißnahtanfangsabschnittes (4.2) und/oder des Schweißnahtendabschnittes (4.3) ausgebildet ist.

4. Baugruppe nach einem der vorhergehenden Ansprüche, **dadurch gekennzeichnet, dass** das erste metallische Bauteil (1) und das zweite metallische Bauteil (2) aus einem Aluminiumwerkstoff hergestellt sind.

5. Verfahren zur Herstellung einer Fügeverbindung mit einer zwischen einem ersten metallischen Bauteil (1) und einem zweiten metallischen Bauteil (2) verlaufenden und mittels eines Energiestrahls hergestellten Schweißnaht (4), wobei die Schweißnaht (4) einen Schweißnahtanfangsabschnitt (4.2) und einen Schweißnahthauptabschnitt (4.1) aufweist und
wobei folgende Verfahrensschritte durchgeführt werden:
- Erzeugen eines Schweißnahtanfangsabschnittes (4.2) der Schweißnaht (4) in einem Bereich des ersten oder zweiten Bauteils (1, 2), wobei dieser Bereich als gegenüber den einen Fügespalt (3) bildenden Oberkanten (1.2, 2.2) der beiden Bauteile (1, 2) lokale außerhalb des Fügespaltes (3) abgesenkte Vertiefung (2.4) ausgebildet ist,
- Führen des Energiestrahls ausgehend von dem Bereich des Schweißnahtanfangsabschnittes (4.2) in den von den metallischen Bauteilen (1, 2) gebildeten Fügespalt (3), und
- Erzeugen eines Schweißnahthauptabschnittes (4.1) entlang des von den metallischen Bauteilen (1, 2) gebildeten Fügespaltes (3).

6. Verfahren zur Herstellung einer Fügeverbindung mit einer zwischen einem ersten metallischen Bauteil (1) und einem zweiten metallischen Bauteil (2) verlaufenden und mittels eines Energiestrahls hergestellten Schweißnaht (4), wobei die Schweißnaht (4) einen Schweißnahthauptabschnitt (4.1) und einen Schweißnahtendabschnitt (4.3) aufweist und wobei folgende Verfahrensschritte durchgeführt werden:- Erzeugen eines Schweißnahtendabschnittes (4.3) der Schweißnaht (4) in einem Bereich des ersten oder zweiten Bauteils (1, 2), wobei dieser Bereich als gegenüber den einen Fügespalt (3) bildenden Oberkanten (1.2, 2.2) der beiden Bauteile (1, 2) lokale außerhalb des Fügespaltes (3) abgesenkte Vertiefung (2.6) ausgebildet ist,
- Führen des Energiestrahls ausgehend von dem Bereich des Schweißnahthauptabschnittes (4.1) in den von den metallischen Bauteilen (1, 2) gebildeten Fügespalt (3),
- Erzeugen eines Schweißnahthauptabschnittes (4.1) entlang des von den metallischen Bauteilen (1, 2) gebildeten Fügespaltes (3) mittels des Energiestrahls, und
- Erzeugen eines Schweißnahtendabschnittes (4.3) der Schweißnaht (4) in einem Bereich des ersten oder zweiten Bauteils (1, 2) mittels des aus der Richtung des Fügespaltes (3) herausgeführten Energiestrahls.

7. Verfahren nach Anspruch 5, wobei folgende Verfahrensschritte zusätzlich durchgeführt werden:
- Erzeugen eines Schweißnahtendabschnittes (4.3) der Schweißnaht (4) in einem Bereich des ersten oder zweiten Bauteils (1, 2), wobei dieser Bereich als gegenüber den einen Fügespalt (3) bildenden Oberkanten (1.2, 2.2) der beiden Bauteile (1, 2) lokale außerhalb des Fügespaltes (3) abgesenkte Vertiefung (2.6) ausgebildet ist und
- Erzeugen eines Schweißnahtendabschnittes (4.3) der Schweißnaht (4) in einem Bereich des ersten oder zweiten Bauteils (1, 2) mittels des aus der Richtung des Fügespaltes (3) herausgeführten Energiestrahls

8. Verfahren nach einem der Ansprüche 5 bis 7, bei welchem als Energiestrahl der Lichtbogen eines Lichtbogenschweißverfahrens eingesetzt wird.

## Claims

1. Module (10) consisting of a first metallic component (1) and a second metallic component (2) which are joined with a welding seam (4), generated by means of a welding procedure, as a joining connection,
wherein
- the welding seam (4) has a welding seam main portion (4.1) extending along a joining gap (3) formed between the metallic components (1, 2), **characterised in that**
- the welding seam (4) has a welding seam initial section (4.2) led out of the direction of the joining gap (3) into the first or second component (1, 2), wherein in the region of the welding scene initial section (4.2) the first or second component (1, 2) has an indentation (2.4) locally sunken with respect to the upper edges (1.2, 2.2), forming the joining gap (3), of the two components (1, 2), and/or
- the welding seam (4) has a welding seam end section (4.3) led out of the direction of the joining gap (3) into the first or second component (1, 2), wherein the first or second component (1, 2) in the region of the welding seam end section (4.3) has an indentation (2.6) locally sunken with respect to the upper edges (1.2, 2.2), forming the joining gap (3), of the two components (1, 2), wherein the local indentations (2.4, 2.6) are situated externally to the joining gap (3) in one of the two components (1, 2).

2. Module according to claim 1,
**characterised in that** the sunken indentation (2.4, 2.6) going out from the welding seam main section (4.1) is designed to widen in the shape of a cone perpendicularly to the plane of the joining gap (3).

3. Module according to claim 1 or 2,
**characterised in that**
- the first metallic component (1) is designed as an extruded profile or cast component, and
- the second metallic component (2) is designed as a cast component having at least one local indentation (2.4, 2.6) for receiving the welding seam initial section (4.2) and/or the welding seam end section (4.3).

4. Module according to any of the preceding claims,
**characterised in that** the first metallic component (1) and the second metallic component (2) are made of an aluminium material.

5. Method for producing a joining connection with a welding seam (4) extending between a first metallic component (1) and a second metallic component (2) and created by means of an energy beam, wherein the welding seam (4) has a welding seam initial section (4.2) and a welding seam main section (4.1) and
wherein the following method steps are carried out:
- generation of a welding seam initial section (4.2) of the welding seam (4) in a region of the first or second component (1, 2), wherein this region is designed as an indentation (2.4) locally sunken externally to the joining gap (3) with respect to the upper edges (1.2, 2.2), forming a joining gap (3), of the two components (1, 2),
- guiding the energy beam starting from the region of the welding seam initial section (4.2) into the joining gap (3) formed by the metallic components (1, 2), and
- generation of a welding seam main section (4.1) along the joining gap (3) formed by the metallic components (1, 2).

6. Method for producing a joining connection having a welding seam (4) extending between a first metallic component (1) and a second metallic component (2) and created by means of an energy beam, wherein the welding seam (4) has a welding seam main section (4.1) and a welding seam end section (4.3) and wherein the following method steps are carried out:
- generation of a welding seam end section (4.3) of the welding seam (4) in a region of the first or second component (1, 2), wherein this region is formed as an indentation (2.6) locally sunken externally to a joining gap (3) with respect to the upper edges (1.2, 2.2), forming the joining gap (3), of the two components (1, 2),
- guiding the energy beam starting from the region of the welding seam main section (4.1) into the joining gap (3) formed by the metallic components (1, 2),
- generation, by means of the energy beam, of a welding seam main section (4.1) along the joining gap (3) formed by the metallic components (1, 2) and
- generation of a welding seam end section (4.3) of the welding seam (4) in a region of the first or second component (1, 2) by means of the energy beam led out of the direction of the joining gap (3).

7. Method according to claim 5, wherein the following method steps are additionally carried out:
- generation of a welding seam end section (4.3) of the welding seam (4) in a region of the first or second component (1, 2), wherein this region is formed as an indentation (2.6) locally sunken externally to the joining gap (3) with respect to the upper edges (1.2, 2.2), forming the joining gap (3), of the two components (1, 2), and
- generation of a welding seam end section (4.3) of the welding seam (4) in a region of the first or second component (1, 2) by means of the energy beam led out of the direction of the joining gap (3).

8. Method according to any of claims 5 to 7, in which the arc of an arc welding process is employed as the energy beam.

## Revendications

1. Ensemble (10) constitué par un premier composant métallique (1) et un second composant métallique (2) qui sont reliés à un cordon de soudure (4) fabriqué au moyen d'un procédé de soudure comme assemblage par aboutement,
dans lequel
- le cordon de soudure (4) présente une section principale de cordon de soudure (4.1) s'étendant le long d'une fente de jonction (3) formée entre les composants métalliques (1, 2), **caractérisé en ce que**
- le cordon de soudure (4) présente une section initiale de cordon de soudure (4.2) guidée hors de la direction de la fente de jonction (3) dans le premier ou second composant (1, 2), dans lequel le premier ou second composant (1, 2) présente dans la zone de la section initiale de cordon de soudure (4.2) une cavité (2.4) abaissée locale par rapport aux arêtes supérieures (1.2, 2.2) formant la fente de jonction (3) des deux composants (1, 2), et/ou
- le cordon de soudure (4) présente une section de cordon de soudure (4.3) guidée hors de la direction de la fente de jonction (3) dans le premier ou second composant (1, 2), dans lequel le premier ou second composant (1, 2) présente dans la zone de la section terminale de cordon de soudure (4.3) une cavité (2.6) abaissée locale par rapport aux arêtes supérieures (1.2, 2.2) formant la fente de jonction (3) des deux composants (1, 2), dans lequel les cavités (2.4, 2.6) locales se trouvent en dehors de la fente de jonction (3) dans un des deux composants (1, 2).

2. Ensemble selon la revendication 1,
**caractérisé en ce que** la cavité (2.4, 2.6) abaissée est réalisée s'élargissant en forme de cône à partir de la section principale de cordon de soudure (4.1) perpendiculairement au plan de la fente de jonction (3).

3. Ensemble selon la revendication 1 ou 2,
**caractérisé en ce que**
- le premier composant métallique (1) est réalisé comme profil extrudé ou composant coulé, et
- le second composant métallique (2) est réalisé comme composant coulé avec au moins une cavité (2.4, 2.6) locale pour le logement de la section initiale de cordon de soudure (4.2) et/ou de la section terminale de cordon de soudure (4.3).

4. Ensemble selon l'une quelconque des revendications précédentes,
**caractérisé en ce que** le premier composant métallique (1) et le second composant métallique (2) sont fabriqués en un matériau d'aluminium.

5. Procédé de fabrication d'un assemblage par aboutement avec un cordon de soudure (4) fabriqué au moyen d'un faisceau d'énergie et s'étendant entre un premier composant métallique (1) et un second composant métallique (2), dans lequel le cordon de soudure (4) présente une section initiale de cordon de soudure (4.2) et une section principale de cordon de soudure (4.1) et
dans lequel les étapes de procédé suivantes sont réalisées :
- la génération d'une section initiale de cordon de soudure (4.2) du cordon de soudure (4) dans une zone du premier ou second composant (1.2), dans lequel cette zone est réalisée comme une cavité (2.4) abaissée en dehors de la fente de jonction (3) locale par rapport aux arêtes supérieures (1.2, 2.2) formant une fente de jonction (3) des deux composants (1, 2),
- le guidage du faisceau d'énergie à partir de la zone de la section initiale de cordon de soudure (4.2) dans la fente de jonction (3) formée par les composants métalliques (1, 2), et
- la génération d'une section principale de cordon de soudure (4.1) le long de la fente de jonction (3) formée par les composants métalliques (1, 2).

6. Procédé de fabrication d'un assemblage par aboutement avec un cordon de soudure (4) fabriqué au moyen d'un faisceau d'énergie et s'étendant entre un premier composant métallique (1) et un second composant métallique (2), dans lequel le cordon de soudure (4) présente une section principale de cordon de soudure (4.1) et une section terminale de cordon de soudure (4.3) et dans lequel les étapes de procédé suivantes sont réalisées :
- la génération d'une section terminale de cordon de soudure (4.3) du cordon de soudure (4) dans une zone du premier ou second composant (1, 2), dans lequel cette zone est réalisée comme une cavité (2.6) abaissée en dehors de la fente de jonction (3) locale par rapport aux arêtes supérieures (1.2, 2.2) formant une fente de jonction (3) des deux composants (1, 2),
- le guidage du faisceau d'énergie à partir de la zone de la section principale de cordon de soudure (4.1) dans la fente de jonction (3) formée par les composants métalliques (1, 2),
- la génération d'une section principale de cordon de soudure (4.1) le long de la fente de jonction (3) formée par les composants métalliques (1, 2) au moyen du faisceau d'énergie, et
- la génération d'une section terminale de cordon de soudure (4.3) du cordon de soudure (4) dans une zone du premier ou second composant (1, 2) au moyen du faisceau d'énergie guidé hors de la direction de la fente de jonction (3).

7. Procédé selon la revendication 5, dans lequel les étapes de procédé suivantes sont réalisées en plus :
- la génération d'une section terminale de cordon de soudure (4.3) du cordon de soudure (4) dans une zone du premier ou second composant (1, 2), dans lequel cette zone est réalisée comme une cavité (2.6) abaissée en dehors de la fente de jonction (3) locale par rapport aux arêtes supérieures (1.2, 2.2) formant une fente de jonction (3) des deux composants (1, 2), et
- la génération d'une section terminale de cordon de soudure (4.3) du cordon de soudure (4) dans une zone du premier ou second composant (1, 2) au moyen du faisceau d'énergie guidé hors de la direction de la fente de jonction (3).

8. Procédé selon l'une quelconque des revendications 5 à 7, pour lequel l'arc électrique d'un procédé de soudure à l'arc est utilisé comme faisceau d'énergie.
